# EUROPEAN PATENT APPLICATION

(11) **EP 2 579 195 A1**
(43) Date of publication of application: **10.04.2013**
(21) Application number: 11786572.5
(22) Date of filing: 20.05.2011
(51) Int. Cl.: G06Q 20/00

(54) **METHOD FOR MANAGING PAYMENT MEANS OVER A NETWORK USING ELECTRONIC WALLET, PAYMENT MEANS MANAGEMENT DEVICE, AND PAYMENT MEANS MANAGEMENT PROGRAM**

(30) Priority: 25.05.2010 JP 2010119313
(71) Applicant: NEC Corporation, Tokyo 108-8001 (JP); NEC Soft, Ltd., Tokyo 136-8627 (JP)
(72) Inventor: NEZU Satoshi, Tokyo 108-8001 (JP); KAWANO Yoshitaka, Tokyo 136-8627 (JP)
(74) Representative: Betten & Resch
(86) International application number: PCT/JP2011/061666
(87) International publication number: WO 2011/148873

(57) **Abstract**

The need for input and transmission of information necessary for settlement each time accounts are settled is eliminated. Necessary information to settle accounts by using a payment system is received from a terminal used by a user and stored. The received information and the payment system using the information are tied and managed for each user. When settlement processing of a certain user is requested from a business operator site, the payment systems that can be used by the certain user are identified by using an account management function unit and the settlement processing by the selected payment system is performed by using the necessary information tied to the payment system selected by the certain user from among the identified payment systems.

## Description

### {Technical Field}

The present invention relates to management of a payment system (payment means or method of payment) such as a settlement using the payment system and a selection of the payment system.

### {Background Art}

Currently, electronic transactions are conducted generally and widely over a network such as an Internet network, mobile communication network, and next-generation network (hereinafter, referred to as a "network" where relevant).

When a commodity price is paid in an electronic transaction over a network, it is necessary for the user to input information needed for settlement such as the credit card number for each site each time a transaction is conducted.

Some sites allow the user to register credit card information; but in that case, the registered settlement information can be used only on the relevant site and if settlement processing should be performed on another site, it is necessary to input/register settlement information anew.

It is troublesome and inconvenient for the user to register settlement information each time on a site used anew. Above all, the possibility of information leakage increases with registration of settlement information on many sites, posing a problem in terms of safety.

A technology in view of the above point is described in Patent Literature 1. According to the technology described in Patent Literature 1, an IC card or IC chip is caused to store information needed for settlement such as the account number. Then, when accounts are settled over a network, the IC card or IC chip is read by a dedicated reader to acquire information needed for settlement such as the account number. Accordingly, the time and effort to input information needed for settlement such as the credit card number each time accounts are settled can be saved.

### {Citation List}

### {Patent Literature}

{PTL1} JP-A-2003-016361

### {Summary of Invention}

### {Technical Problem}

If the technology described in PTL1 is used, the time and effort to input information needed for settlement each time accounts are settled can be saved.

However, according to the technology described in PTL1, important personal information such as the account number and credit card number needs to be transmitted over a public line such as the Internet each time accounts are settled. Moreover, transmitted information may be leaked in a public line such as the Internet. Thus, transmitting important personal information each time accounts are settled is not preferable from the viewpoint of security. If many different payment systems are used for different purposes, many kinds of personal information need to be transmitted, posing more dangers.

An object of the present invention is to provide a payment system management method, a payment system management apparatus, and a payment system management program over a network with an electronic purse (wallet) that does not require input and transmission of information needed for settlement each time accounts are settled.

According to a first exemplary aspect of the present invention, there is provided a settlement apparatus connected to each of a terminal used by a user and a business operator site connected to the terminal used by the user to manage a payment system (payment means or method of payment) and to settle accounts, including: an account management storage unit that receives and stores necessary information to settle accounts by using the payment system;
an account management function unit that ties and manages the received information and the payment system using the information for each of the users; and a settlement management function unit that, when settlement processing of a certain user is requested from the business operator site, identifies the payment systems that can be used by the certain user by using the account management function unit and performs the settlement processing by using the necessary information tied to the payment system selected by the certain user from among the identified payment systems, the settlement processing being performed by the selected payment system.

According to a second exemplary aspect of the present invention, there is provided a settlement management system in which a terminal used by a user, a business operator site connected to the terminal used by the user, and a settlement apparatus that manages a payment system and settles accounts are mutually connected, wherein the terminal used by the user transmits necessary information to settle accounts, by using the payment system, to the settlement apparatus and specifies, when a transaction is conducted at the business operator site, the payment system for the settlement apparatus,
the business operator site requests the settlement apparatus to perform a portion or all of settlement processing at the business operator site, and the settlement apparatus is the settlement apparatus according to the first exemplary aspect of the present invention.

According to a third exemplary aspect of the present invention, there is provided a settlement method executed by a settlement apparatus connected to each of a terminal used by a user and a business operator site connected to the terminal used by the user to manage a payment system and to settle accounts, including the steps of:
preparing an account management storage unit that receives and stores necessary information to settle accounts by using the payment system;
tying and managing the received information and the payment system using the information for each of the users; and
when settlement processing of a certain user is requested from the business operator site, identifying payment systems that can be used by the certain user by executing the account management function step and performing the settlement processing by the selected payment system by using the necessary information tied to the payment system selected by the certain user from among the identified payment systems, the settlement processing being performed by the selected payment system.

According to a fourth exemplary aspect of the present invention, there is provided a settlement program incorporated into a settlement apparatus connected to each of a terminal used by a user and a business operator site connected to the terminal used by the user to manage a payment system and to settle accounts, the program causing a computer to function as the settlement apparatus, the settlement apparatus including: an account management storage unit that receives and stores necessary information to settle accounts by using the payment system;
an account management function unit that ties and manages the received information and the payment system using the information for each of the users; and a settlement management function unit that, when settlement processing of a certain user is requested from the business operator site, identifies the payment systems that can be used by the certain user by using the account management function unit and performs the settlement processing by using the necessary information tied to the payment system selected by the certain user from among the identified payment systems, the settlement processing being performed by the selected payment system.

### {Advantageous Effects of Invention}

According to the present invention, a settlement apparatus is caused to store information needed for settlement and the settlement apparatus acts as a proxy for a business operator site and therefore, a settlement method that does not require input and transmission of information needed for settlement each time accounts are settled can be realized.

### {Brief Description of Drawings}

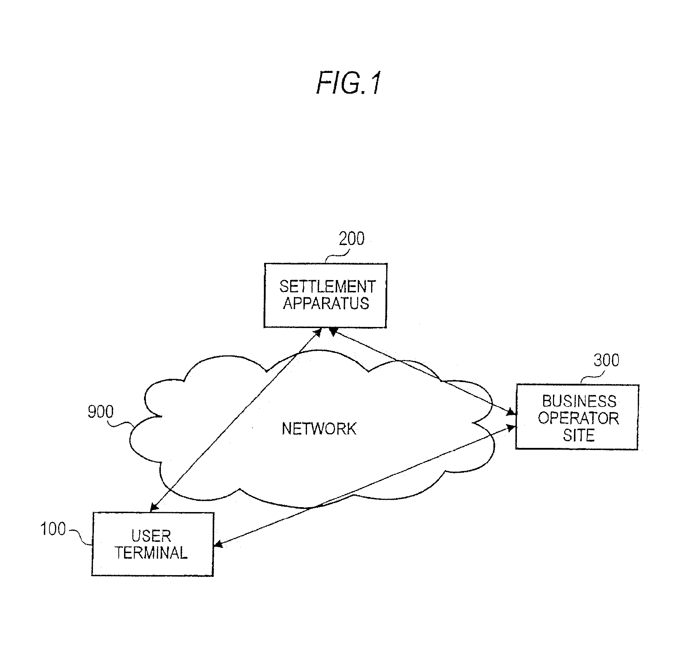

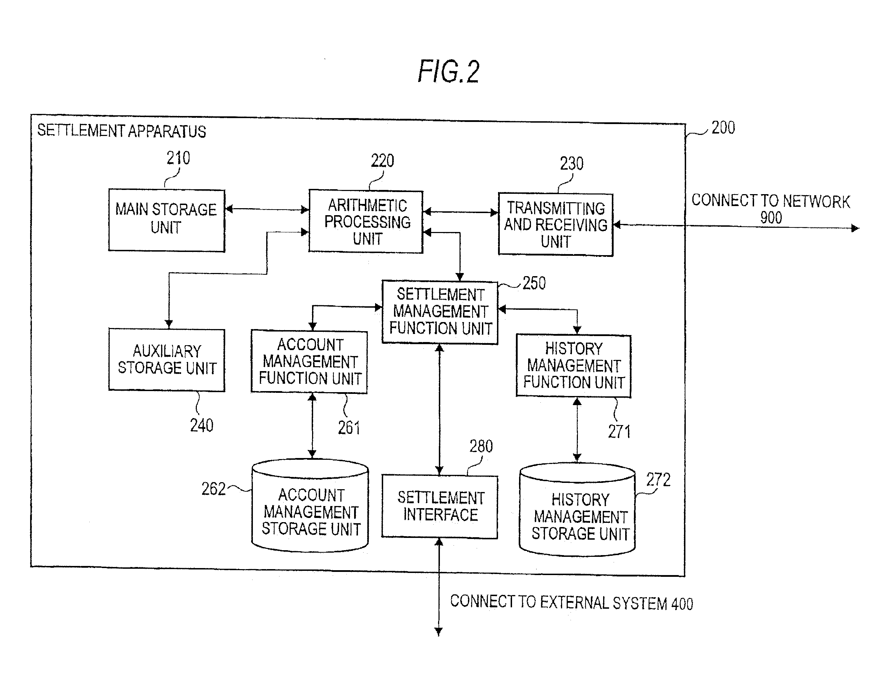

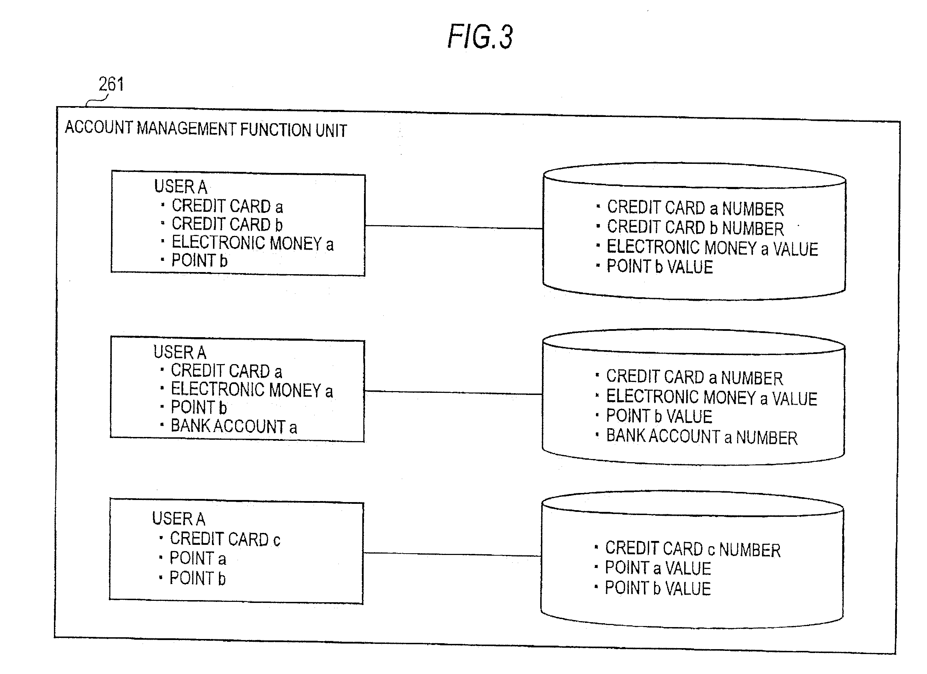

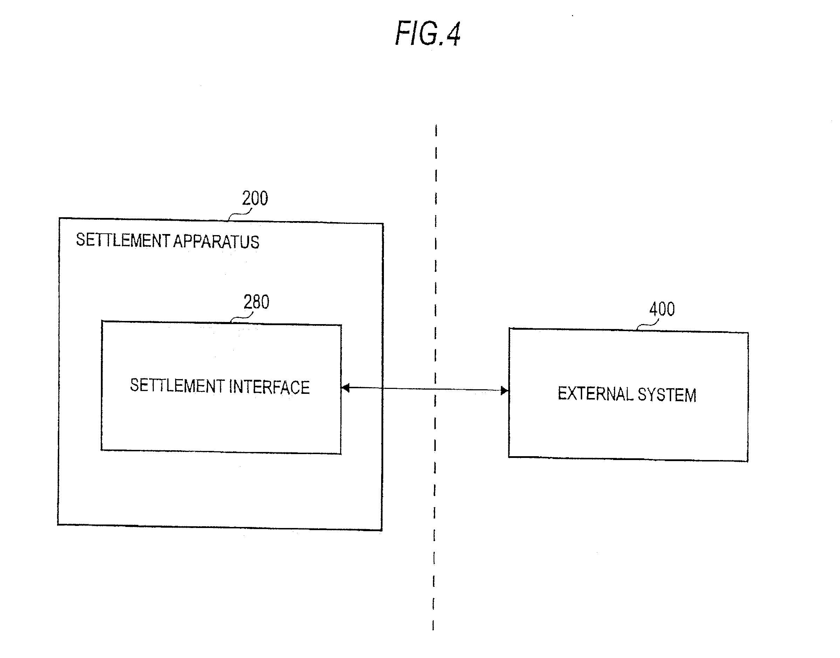

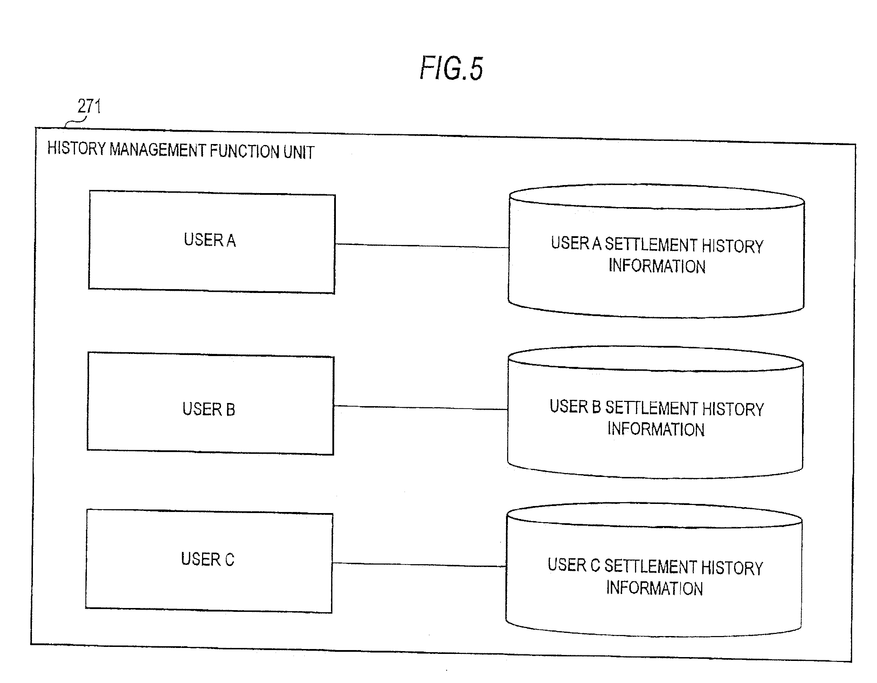

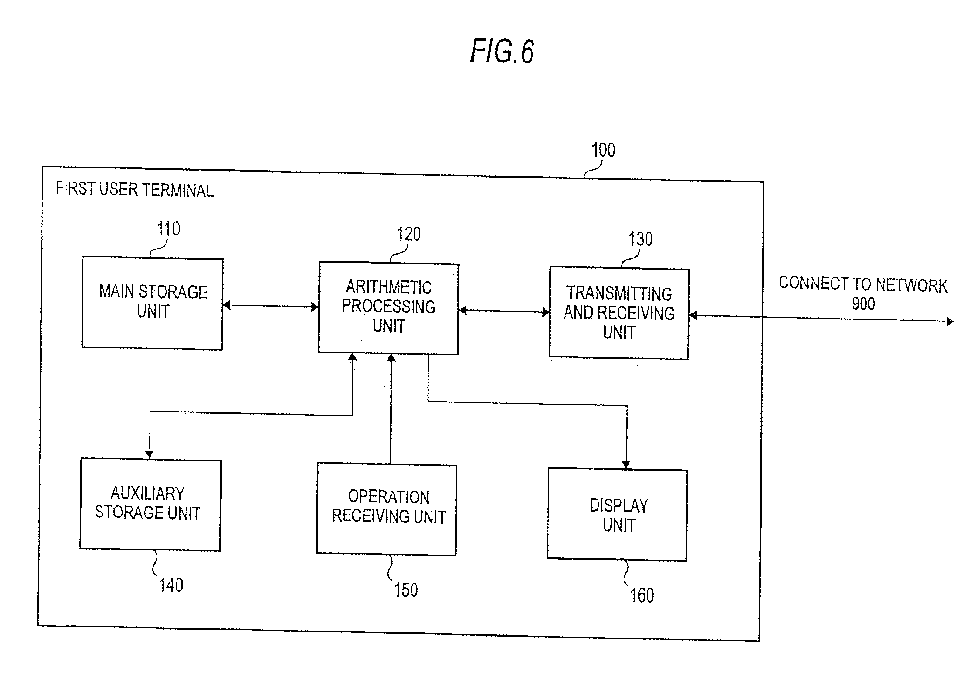

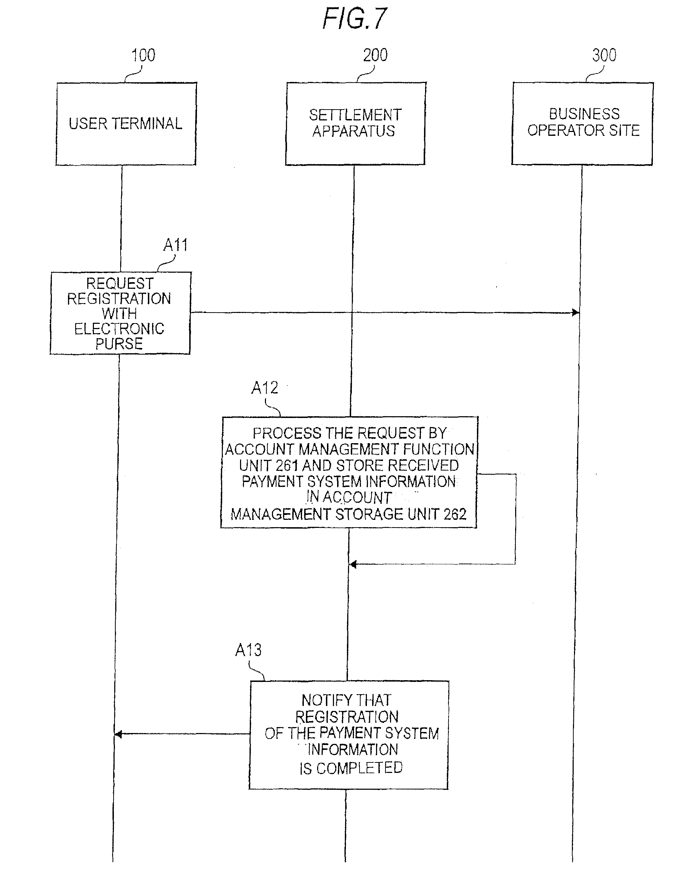

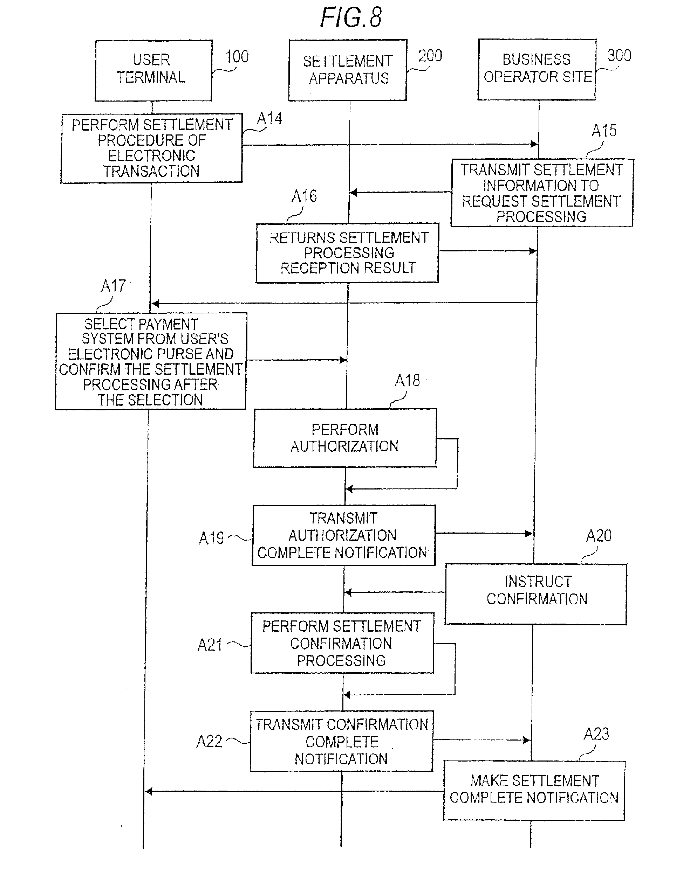

{FIG. 1} A diagram shows a basic configuration of an overall embodiment of the present invention.
{FIG. 2} A diagram shows the basic configuration of a settlement apparatus according to the embodiment of the present invention.
{FIG. 3} A diagram shows a concrete example of a management method of an account management function unit according to the embodiment of the present invention.
{FIG. 4} A diagram shows a connection of a settlement interface and an external system according to the embodiment of the present invention.
{FIG. 5} A diagram shows a concrete example of the management method of a history management function unit according to the embodiment of the present invention.
{FIG. 6} A diagram shows the basic configuration of a user terminal according to the embodiment of the present invention.
{FIG. 7} A sequence diagram (1/2) shows a basic operation of the embodiment of the present invention.
{FIG. 8} A sequence diagram (2/2) shows the basic operation of the embodiment of the present invention.

### {Reference Signs List}

- 100: User terminal
- 110: Main storage unit
- 120: Arithmetic processing unit
- 130: Transmitting and receiving unit
- 140: Auxiliary storage unit
- 150: Operation receiving unit
- 160: Display unit
- 200: Settlement apparatus 200
- 210: Main storage unit
- 220: Arithmetic processing unit
- 230: Transmitting and receiving nit
- 240: Auxiliary storage unit
- 250: Settlement management function unit
- 261: Account management function unit
- 262: Account management storage unit
- 271: History management function unit
- 272: History management storage unit
- 280: Settlement interface
- 300: Business operator site
- 400: External system
- 900: Network

### {Description of Embodiment}

Next, an embodiment of the present invention will be described in detail by using the drawings.

The present embodiment is used by a user who settle accounts by using a payment system such as a credit card, electronic money, and points (hereinafter, referred to as the "user" where relevant) and a business operator with whom the user conducts electronic transactions to purchase articles or content (hereinafter, referred to as the " business operator" where relevant).

Referring to FIG. 1, the present embodiment includes a user terminal 100, a settlement apparatus 200, a business operator site 300, and a network 900. The user terminal 100, the settlement apparatus 200, and the business operator site 300 are mutually connected via the network 900.

The user terminal 100 is a terminal used by the user for electronic transactions. More specifically, the user terminal 100 may be realized by any apparatus and is realized by, for example, a personal computer or a mobile phone.

The settlement apparatus 200 is an apparatus that settles accounts by providing a clearing function. More specifically, the settlement apparatus 200 is a server or the like provided by an enterprise in a network.

The business operator site 300 is a site that conducts electronic transactions of articles and content through a network. The business operator site 300 is connected to each of the multi-settlement system 100 and the user terminal 200 via the network 900. Incidentally, the business operator site 300 is actually realized by, for example, a document on a Web server in a network being browsed by a Web browser included in the user terminal 100.

The network 900 is, for example, an Internet network, but is not limited to this example. The communication method on which the network 900 is based is not specifically limited. In addition, whether the network 900 is wire connected or wireless connected is not specifically limited.

Next, an overview of communication among the user terminal 100, the settlement apparatus 200, and the business operator site 300 will be provided.

The present embodiment provides the settlement apparatus 200 that provides a settlement service to a site involved in various settlements such as electronic transactions.

The user registers a payment system such as credit card information on the settlement apparatus 200 with a virtual account of the system. In this case, the virtual account of electronic money points prepared for settlement can be charged from other payment systems such as a credit card. Payment systems possessed by the user include, for example, the credit card, electronic money, points, and bank transfer, but these payment systems are only examples and other payment systems may be included. Moreover, all these examples need not necessarily be included.

The user can have a virtual purse (hereinafter, referred to an "electronic purse" when appropriate) on the settlement apparatus 200 by having a plurality of accounts corresponding to an actual payment system on the settlement apparatus 200 and can make a payment by freely selecting the payment system registered with the electronic purse at an electronic transaction site using the clearing function of the settlement apparatus 200.

Next, the user settles accounts for transactions such as the purchase of articles/content at the business operator site 300. The business operator site 300 redirects the settlement apparatus 200 during settlement to settle accounts by using the clearing function provided by the settlement apparatus 200. At this point, the user selects the payment system such as the credit card, electronic money, and points from the electronic purse registered in advance to settle accounts. The payment by the user is completed by returning to the business operator site 300 after settlement processing is completed.

By registering credit card information of the user or electronic money information issued and managed by the settlement apparatus 200 with an electronic purse in a system and using the electronic purse at various electronic transaction sites using the target system in this manner, accounts can be settled without input of settlement information such as the credit card number.

Next, the settlement apparatus 200 will be described in detail with reference to FIG. 2.

The settlement apparatus 200 includes a main storage unit 210, an arithmetic processing unit 220, a transmitting and receiving unit 230, an auxiliary storage unit 240, a settlement management function unit 250, an account management function unit 261, an account management storage unit 262, a history management function unit 271, a history management storage unit 272, and a settlement interface 280.

The main storage unit 210 is a storage unit, typically a RAM (Random Access Memory). The arithmetic processing unit 220 is an arithmetic unit, typically a CPU (Central Processing Unit) or the like, and performs arithmetic processing. The transmitting and receiving unit 230 is a unit to perform communication via the network 900.

The auxiliary storage unit 140 is a storage unit, typically an HDD (Hard Disk Drive) or SSD (Solid State Drive), and stores various kinds of data or various programs.

The account management function unit 261, the settlement management function unit 250, the history management function unit 271, and the settlement interface 280 are portions specific to the present embodiment. The account management function unit 261, the settlement management function unit 250, and the history management function unit 271 are realized by a program (software) stored in the auxiliary storage unit 140 being read by the arithmetic processing unit 120 and arithmetic processing being performed by using the read program and the main storage unit 110. The settlement interface 280 is realized by a combination of hardware functioning as an interface and the above arithmetic processing.

The account management storage unit 262 and the history management storage unit 272 are storage units and are realized by, like the auxiliary storage unit 140, an HDD or SSD. The account management storage unit 262, the history management storage unit 272, and the auxiliary storage unit 140 are illustrated in FIG. 2 as separate storage units, but FIG. 2 shows only an example of the configuration. For example, a configuration in which the account management storage unit 262 and the history management storage unit 272 are included in the auxiliary storage unit 140 may be adopted. Alternatively, one or both of the account management storage unit 262 and the history management storage unit 272 may be provided outside the settlement apparatus 200. Alternatively, one or both of the account management storage unit 262 and the history management storage unit 272 may be made redundant by a plurality of storage units. Alternatively, information stored in one or both of the account management storage unit 262 and the history management storage unit 272 may be handled by encrypting the information. Content stored in the account management storage unit 262 and the history management storage unit 272 will be described later.

Next, the functions of the account management function unit 261, the settlement management function unit 250, the history management function unit 271, and the settlement interface 280 will be described.

A payment system possessed by the user can be registered and held by the account management function unit 261. Any type of the payment system that can be registered can be selected. It is assumed here that the credit card, electronic money, points, and bank account are present.

A plurality of types of payment systems can be registered for each type of the payment system like types a, b, c of the credit card and types d, e, f of the electronic money.

Payment system information is held by the account management storage unit 262. Value information such as electronic money is held and managed by the account management storage unit 262. In addition, payment systems that electronically record value such as electronic money and points may be issued and managed by the settlement apparatus 200.

The settlement management function unit 250 can perform settlement processing by using a payment system managed by the account management function unit 261. Among electronic money and points, values electronically recorded and having value (hereinafter, referred to as the "value" where relevant) such as electronic money points and coupons may be managed in the settlement apparatus 200 and in such a case, the value is subtracted by the settlement management function.

A history of settlement can be accumulated and browsed by the history management function unit 271. History information is held by the history management storage unit 272.

The settlement interface 280 provides an interface for an external connection needed when, for example, a credit card is used.

If the settlement management function unit 250 determines that it is necessary to use an external system based on the type of the payment system, the settlement management function unit 250 connects to the credit card settlement apparatus 200 in the case of, for example, a credit card through the settlement interface 280 to settle accounts.

Next, the management method by the account management function unit 261 will be described with reference to FIG 3 by citing a concrete example.

In FIG. 3, the account management function unit 261 handles payment system information for each user and manages and holds the payment system information tied to the user.

Any number of payment systems can be registered for each user. Further, a plurality of types can be registered for the same type of payment system. In the case of the credit card, for example, a plurality of credit cards having different credit card numbers can be registered and similarly, a plurality of different types of electronic money or points can be registered.

As the management method of payment system, the credit card and the bank account are registered and managed by the credit card number and the bank account number respectively. Regarding electronic money and points, the value thereof is managed by the account management function and the value of electronic money or points is held inside the settlement apparatus 200.

Regarding other payment systems, any payment system can be added to the settlement apparatus 200 and the settlement interface 280 is used to register information necessary when the settlement interface 280 is used. This point will be described more specifically. As is evident from FIG. 2, the settlement management function unit 250 is connected to the settlement interface 280.

Also, as is evident from FIG. 4, the settlement interface 280 is connected to an external system 400. The settlement interface 280 is used when, like a credit card, a connection to an external system is needed. When accounts are settled by the settlement management function unit 250, if the settlement needs the external system 400, the external system 400 is connected through the settlement interface 280 to settle accounts.

More specifically, the settlement management function unit 250 receives a settlement processing request from the business operator site 300, fetches the payment system specified by the target user from the account management function unit 261, and connected to the external system 400 through the settlement interface 280 to perform settlement processing. The external system 400 is, for example, a server set up by a bank or credit card issuing company. In terms of security, the external system 400 is preferably connected by a dedicate line.

Depending on the payment system, on the other hand, settlement processing can be completed inside the settlement apparatus 300 only. Regarding the payment system, for example, electronic money whose value can be managed inside the settlement apparatus 300, settlement processing can be completed inside the settlement apparatus 300 only without using the settlement interface 280.

Therefore, in the case of electronic money or points, value information of electronic money or points recorded in the account management storage unit 262 through the account management function unit 261. When the settlement is completed, the history management function unit 271 is instructed to write a record of the target settlement.

Next, the management method by the history management function unit 271 will be described with reference to FIG. 5 by citing a concrete example.

In FIG. 5, the history management function unit 271 records settlement records by the settlement management function unit 250 for each user. Record content includes the settlement date/time, payment system, amount, and target business operator. The history management function unit 271 outputs any settlement record in response to a request. That is, the business operator or the user can acquire and browse any settlement record through the history management function unit 271.

Next, the user terminal 100 will be described in detail with reference to FIG. 6. It is assumed this time that the user terminal 100 is realized by a personal computer.

The user terminal 100 includes a main storage unit 110, a arithmetic processing unit 120, a transmitting and receiving unit 130, an auxiliary storage unit 140, an operation receiving unit 150, and a display unit 160.

The main storage unit 110 is a storage unit, typically a RAM. The arithmetic processing unit 120 is an arithmetic unit, typically a CPU or the like, and performs arithmetic processing. The transmitting and receiving unit 130 is a unit to perform communication via the network 900.

The auxiliary storage unit 140 is a storage unit, typically an HDD or SSD, and stores various kinds of data or various programs.

The operation receiving unit 150 is a unit to receive input from the user and, more specifically, is connected to an input device such as a keyboard, mouse, touch panel or the like to receive input information from these input devices.

The display unit 160 is connected to a display apparatus like a display to present information to the user and causes the display apparatus to display the information.

Next, the operation according to the present embodiment will be described in detail with reference to FIGS. 1 to 6 and sequence diagrams in FIGS. 7 and 8.

First, the user needs to register settlement information of the user with the settlement apparatus 200. Then, the user uses the user terminal 100 to connect to the settlement apparatus 200 via the network 900 for registration. After the connection is established, the user requests to register payment system information such as a credit card number with an electronic purse on the settlement apparatus 200 (step A11 in FIG. 7).

The settlement apparatus 200 having received a settlement registration request from the user terminal 100 processes the request through the account management function unit 261 and stores payment system information received from the user terminal 100 in the account management storage unit 262 (step A12 in FIG. 7).

The settlement apparatus 200 notifies the user terminal 100 that registration of the payment system information is completed (A13 in FIG. 7).

This time, an example of registering payment system information by using the user terminal 100 in steps A11 to A13 shown in FIG. 7 is described. However, the method used for registration of payment system information is not limited to the method using the user terminal 100. For example, payment system information may be registered by an operator using a terminal installed in a branch office of a bank or credit company. Alternatively, the user may register payment system information by using any other terminal than the user terminal 100.

When the registration of the payment system is completed, the user connects to the business operator site 300 via a network by using the user terminal 100. The user goes through a settlement procedure of an electronic transaction at the business operator site 300 (step A14 in FIG. 8).

If the payment system is already registered and there is no particular need to change the payment system, the electronic transaction can be started by omitting steps A11 to A13 in FIG. 7. In the present embodiment, one user may use a plurality of the user terminals 100 for different purposes. For example, each operation shown in FIG. 8 may be performed by using the user terminal 100 that is different from the user terminal 100 having performed the operation of steps A11 to A13 in FIG 7. More specifically, for example, payment system information may be registered by a personal computer while transactions described below may be conducted by using a mobile phone.

Next, the business operator site 300 transmits settlement information such as article information and the total amount of settlement amounts to the settlement apparatus 200 to request settlement processing (step A15 in FIG 8). If the business operator site 300 limits payment systems that can be used at the site (for example, the automatic deduction from a bank account is not available), the information may also be transmitted.

The settlement apparatus 200 returns a settlement processing reception result to the business operator site 300 (stepA16 in FIG. 8).

The settlement processing reception result from the business operator site 300 is returned to the user terminal 100 and the user terminal 100 is redirected to connect to the settlement apparatus 200. Here, the user selects the payment system registered in steps A11 to A13 in FIG 7 from the user's electronic purse on the settlement apparatus 200. After the payment system is selected, the user confirms the settlement processing (step A17 in FIG. 8). If, as described above, the business operator site 300 limits payment systems that can be used at the site, the user selects the payment system from among payment systems that can be used at the business operator site 300 and registered in steps A11 to A13 in FIG. 7.

The settlement apparatus 200 performs credit processing (hereinafter, referred to as "authorization" where relevant) whether the specified settlement is allowed such as balance confirmation and confirmation of the amount that can be paid for the payment system selected by the user is performed (step A18 in FIG. 8).

If the authorization is completed, the settlement apparatus 200 transmits an authorization complete notification to the business operator sire 300 (step A19 in FIG. 8). On the other hand, if the authorization fails, the settlement apparatus 200 transmits an authorization failure notification to the business operator site 300 in the same manner as when the authorization is successful. The business operator site 300 having received the authorization failure notification stops the settlement processing and returns a result of settlement failure to the user terminal 100. Content of the settlement failure notification can be specified freely. For example, the notification may indicate simply that the settlement could not be completed. Alternatively, more specifically, the name of the payment system for which the authorization failed and the reason for the failure may be presented. The reason for the failure may be, for example, insufficient amounts of the payment system of the user.

The business operator site 300 having received the authorization complete notification from the settlement apparatus 200 instructs the settlement apparatus 200 to perform settlement confirmation processing (hereinafter, referred to "confirmation" when relevant) for the target settlement processing in any timing when the settlement should be confirmed after transmission processing of articles is performed or the like (step A20 in FIG. 8).

The settlement apparatus 200 having received the confirmation instruction from the business operator site 300 performs the settlement confirmation processing for the target settlement processing (step A21 in FIG. 8).

After the confirmation is completed, the settlement apparatus 200 transmits a confirmation complete notification to the business operator site 300 (step A22 in FIG. 8).

The business operator site 300 having received the confirmation complete notification makes a settlement complete notification to the user terminal 100 (step A23 in FIG. 8). Accordingly, a sequence of settlement processing is completed.

### (First modification)

Next, a first modification that partially modifies the above embodiment will be described.

The first modification is characterized by the settlement interface 280. More specifically, the first modification is characterized by being able to connect to a plurality of external systems by a unified mechanism.

If an external system is used like when a credit card is used for authorization/confirmation processing in steps A 18 to A22 in FIG. 8, execution of the authorization/confirmation processing is realized by connection to the external system 400 through the settlement interface 280.

A plurality of types of the settlement interface 280 can be prepared and the method of invoking the settlement interface 280 from the settlement management function unit 250 is unified for all types of the settlement interface. Invocation processing of each of the external systems 400 from the settlement interface 280 is matched to each of the external systems 400.

In this manner, the settlement management function unit 250 can invoke a plurality of types of the external systems 400 by the unified invocation method. Thus, a new payment system can be added while limiting the influence of modification of the settlement apparatus 200 or the like by adding a settlement interface if necessary so that various settlement methods can be supported.

### [Second modification]

Next, a second modification that partially modifies the above embodiment will be described.

The second modification enables cancellation of settlement processing when the settlement apparatus 200 is in an authorization complete state in steps A18 and A19 in FIG. 8 shown above.

In step A19 in FIG. 8, the target settlement enters the authorization complete state after the business operator site is notified of authorization completion.

Before a confirmation instruction is issued by the business operator site 300 in the next step A20, the settlement is not confirmed and the authorization complete state continues. At this point, the business operator site 300 can cancel the settlement processing by canceling the authorization. Similarly, the settlement can be canceled from the user side by an instruction being issued by the user from the user terminal 100 to the settlement apparatus 200 before the settlement is confirmed. If no confirmation is issued for a fixed period, the authorization expires and the settlement is similarly canceled. The length of the fixed period can optionally be set.

More specifically, the cancellation is realized by rolling back the payment system whose authorization is completed to restore the state before the authorization.

### [Third modification]

Next, a first modification that partially modifies the above embodiment will be described.

The third modification enables authorization and confirmation successively without any confirmation instruction from the business operator site 300 in steps A18 to A22 in FIG. 8.

In steps A18 to A22 in FIG. 8, confirmation is successively issued after the authorization is completed by omitting the authorization complete notification from the settlement apparatus 200 to the business operator site 300 (step A19) and the confirmation instruction from the business operator site 300 to the settlement apparatus 200 (step A20). In this manner, smooth settlement processing is provided to settlements that do not need confirmation work when, for example, content of a small sum of money is purchased. Processing similar to the processing in steps A18, A21 in the above embodiment is performed for the authorization and confirmation and if the authorization fails, processing of an authorization failure is similarly performed.

The above-described embodiment of the present invention achieves many effects as described below.

According to the present embodiment, an effect of making preparations for a mechanism to perform settlement processing at the business operator site 300 unnecessary for the business operator site 300 is achieved by the settlement service being provided to the business operator site 300 by the settlement apparatus 200.

Also according to the present embodiment, payment system information of the user such as the credit card number, electronic money information, point information, coupon information, and bank account is registered and managed by the settlement apparatus 200 and thus, the user achieves an effect of being able to settle accounts by freely selecting the payment system from among the registered payment systems for settlement. Therefore, the user achieves an effect of being able to perform settlement processing smoothly without input/registration of the payment system for each of the business operator sites 300 by using the payment system registered in advance with the settlement apparatus 200 at the business operator site 300 using the settlement processing of the settlement apparatus 200. In addition, an effect of being able to reduce the risk of information leakage can be achieved by managing payment system information of the user by the settlement apparatus 200 in a unified manner.

Also, an effect of being able to send electronic money is achieved by accounts of electronic money issued and managed by the settlement apparatus 200 being used to move electronic money between accounts.

An apparatus that concretely realizes the user terminal 100 according to the present embodiment is not particularly limited. If, for example, the user terminal 100 is realized by an IC card, the IC card and a reader terminal are required. In the present embodiment, however, the user terminal 100 is not limited to the IC card to have general versatility and an ordinary ID/password method is also made available for user authentication. Thus, the user terminal 100 can be realized also by a device like, for example, a mobile phone.

In the present embodiment, user information and settlement information are stored in the settlement apparatus 200 and important information such as the credit card number can be stored after being encrypted. Thus, after settlement information is registered once, accounts can be settled if user authentication can be performed. Therefore, there is no need to store settlement information in the user terminal 100 so that information leakage can be prevented.

Further in the above embodiment, it is assumed that a program specific to the present embodiment is stored in the payment system management apparatus in advance. However, a computer may be caused to operate as the payment system management apparatus in whole or in part or a program causing a computer to perform the above processing may be stored and distributed in a computer readable recording medium such as a flexible disk, CD-ROM (Compact Disc Read-Only Memory), DVD (Digital Versatile Disc), MO (Magneto Optical Disk (Disc)) BD (Blu-ray Disc) to install the program on another computer to cause the computer to operate as the above system or to cause the computer to execute the above steps.

For example, the payment system management apparatus in a network with an electronic purse as an embodiment of the present invention can be realized by hardware, but can also be realized by a program causing a computer to function as a payment system management apparatus in a network being read and executed from a computer readable recording medium.

Also, the payment system management method over a network with an electronic purse according to an embodiment of the present invention can be realized by hardware, but can also be realized by a program causing a computer to execute the method being read and executed from a computer readable recording medium.

The above embodiment is a preferred embodiment of the present invention, but the scope of the present invention is not limited to the above embodiment and can be carried out in various modifications within the scope without deviating from the gist of the present invention.

This application is based upon Japanese Patent Application No. 2010-119313 (filed on May 25, 2010) and claims the priority of Paris Convention based upon Patent Application No. 2010-119313. Disclosure content of Patent Application No. 2010-119313 is invoked herein by referring to Patent Application No. 2010-119313.

A representative embodiment of the present invention has been described in detail, but it should be understood that various changes, substitutions, and alternatives are made without deviating from the spirit and scope of the present invention defined in claims. Even if a claim should be amended in a filing procedure, the inventors intend that the equivalent scope of the claimed invention be maintained.

The whole or part of the exemplary embodiments above can be described as the following supplementary notes, but are not limited thereto.

(Supplementary note 1) A settlement apparatus connected to each of a terminal used by a user and a business operator site connected to the terminal used by the user to manage a payment system and to settle accounts, comprising:
an account management storage unit that receives and stores necessary information to settle accounts by using the payment system;
an account management function unit that ties and manages the received information and the payment system using the information for each of the users; and
a settlement management function unit that, when settlement processing of a certain user is requested from the business operator site, identifies the payment systems that can be used by the certain user by using the account management function unit and
performs the settlement processing by using the necessary information tied to the payment system selected by the certain user from among the identified payment systems, the settlement processing being performed by the selected payment system.

(Supplementary note 2) The settlement apparatus according to Supplementary note 1, wherein
the settlement processing performed by the settlement management function unit is performed by being divided into two stages of credit processing and settlement confirmation processing, the business operator site is notified that the credit processing is completed after the credit processing is completed, and the settlement confirmation processing is performed after the settlement confirmation processing being instructed to perform from the notified business operator site.

(Supplementary note 3) The settlement apparatus according to Supplementary note 1, wherein
the settlement processing performed by the settlement management function unit is performed by being divided into two stages of credit processing and settlement confirmation processing and if the settlement processing is canceled from the business operator site or the terminal used by the user during the credit processing or after the credit processing, a state before the credit processing is restored by rolling back the payment system for which the credit processing has been performed.

(Supplementary note 4) The settlement apparatus according to any one of Supplementary notes 1 to 3, further comprising:
a plurality of settlement interfaces for requesting an external system to perform all or a portion of the settlement processing in accordance with an instruction from the settlement management function unit, wherein
a method of the instruction to the plurality of settlement interfaces is a same method unified for all the settlement interfaces.

(Supplementary note 5) The settlement apparatus according to any one of Supplementary notes 1 to 4, wherein
the selectable payment system by the certain user is the payment system to which the certain user has transmitted the necessary information and also available at the business operator site that has requested the settlement processing for the certain user.

(Supplementary note 6) The settlement apparatus according to any one of Supplementary notes 1 to 5, further comprising:
a history management storage unit that stores information when the settlement processing is performed as history information; and
a history management function unit that manages the history information for each of the users and outputs the history information in response to a request.

(Supplementary note 7) A settlement management system in which a terminal used by a user, a business operator site connected to the terminal used by the user, and a settlement apparatus that manages a payment system and settles accounts are mutually connected, wherein
the terminal used by the user transmits necessary information to settle accounts, by using the payment system, to the settlement apparatus and specifies, when a transaction is conducted at the business operator site, the payment system for the settlement apparatus,
the business operator site requests the settlement apparatus to perform a portion or all of settlement processing at the business operator site, and
the settlement apparatus is the settlement apparatus according to any one of Supplementary notes 1 to 6.

(Supplementary note 8) A settlement method executed by a settlement apparatus connected to each of a terminal used by a user and a business operator site connected to the terminal used by the user to manage a payment system and to settle accounts, comprising the steps of:
preparing an account management storage unit that receives and stores necessary information to settle accounts by using the payment system;
tying and managing the received information and the payment system using the information for each of the users; and
when settlement processing of a certain user is requested from the business operator site, identifying payment systems that can be used by the certain user by executing the account management function step and performing the settlement processing by the selected payment system by using the necessary information tied to the payment system selected by the certain user from among the identified payment systems, the settlement processing being performed by the selected payment system.

(Supplementary note 9) A settlement program incorporated into a settlement apparatus connected to each of a terminal used by a user and a business operator site connected to the terminal used by the user to manage a payment system and to settle accounts, the program causing a computer to function as the settlement apparatus, the settlement apparatus comprising:
an account management storage unit that receives and stores necessary information to settle accounts by using the payment system;
an account management function unit that ties and manages the received information and the payment system using the information for each of the users; and a settlement management function unit that, when settlement processing of a certain user is requested from the business operator site, identifies the payment systems that can be used by the certain user by using the account management function unit and performs the settlement processing by using the necessary information tied to the payment system selected by the certain user from among the identified payment systems, the settlement processing being performed by the selected payment system.

(Supplementary note 10) The settlement program according to Supplementary note 9, wherein
the settlement processing performed by the settlement management function unit is performed by being divided into two stages of credit processing and settlement confirmation processing, the business operator site is notified that the credit processing is completed after the credit processing is completed, and the settlement confirmation processing is performed after the settlement confirmation processing being instructed to perform from the notified business operator site.

(Supplementary note 11) The settlement program according to Supplementary note 10, wherein
the settlement processing performed by the settlement management function unit is performed by being divided into two stages of credit processing and settlement confirmation processing and if the settlement processing is canceled from the business operator site or the terminal used by the user during the credit processing or after the credit processing, a state before the credit processing is restored by rolling back the payment system for which the credit processing has been performed.

(Supplementary note 12) The settlement program according to any one of Supplementary notes 9 to 11, further comprising:
a plurality of settlement interfaces to request an external system to perform all or a portion of the settlement processing in accordance with an instruction from the settlement management function unit, wherein
a method of the instruction to the plurality of settlement interfaces is a same method unified for all the settlement interfaces.

(Supplementary note 13) The settlement program according to any one of Supplementary notes 8 to 12, wherein
the selectable payment system by the certain user is the payment system to which the certain user has transmitted the necessary information and also available at the business operator site that has requested the settlement processing for the certain user.

(Supplementary note 14) The settlement program according to any one of Supplementary notes 8 to 13, further comprising:
a history management storage unit that stores information when the settlement processing is performed as history information; and
a history management function unit that manages the history information for each user and outputs the history information in response to a request.

### {Industrial Applicability}

The present invention is suitable for electronic settlement markets in an Internet network, mobile network, nexfi-generation network or the like, Also, the present invention is suitable for electronic money/points settlement markets using a reader/writer or the like. For example, the present invention is suitable in the field of electronic malls, EC (Electronic commerce) sites, remittance and the like.

## Claims

1. A settlement apparatus connected to each of a terminal used by a user and a business operator site connected to the terminal used by the user to manage a payment system and to settle accounts, comprising:
an account management storage unit that receives and stores necessary information to settle accounts by using the payment system;
an account management function unit that ties and manages the received information and the payment system using the information for each of the users; and
a settlement management function unit that, when settlement processing of a certain user is requested from the business operator site, identifies the payment systems that can be used by the certain user by using the account management function unit and performs the settlement processing by using the necessary information tied to the payment system selected by the certain user from among the identified payment systems, the settlement processing being performed by the selected payment system.

2. The settlement apparatus according to claim 1, wherein
the settlement processing performed by the settlement management function unit is performed by being divided into two stages of credit processing and settlement confirmation processing, the business operator site is notified that the credit processing is completed after the credit processing is completed, and the settlement confirmation processing is performed after the settlement confirmation processing being instructed to perform from the notified business operator site.

3. The settlement apparatus according to claim 1, wherein
the settlement processing performed by the settlement management function unit is performed by being divided into two stages of credit processing and settlement confirmation processing and if the settlement processing is canceled from the business operator site or the terminal used by the user during the credit processing or after the credit processing, a state before the credit processing is restored by rolling back the payment system for which the credit processing has been performed.

4. The settlement apparatus according to any one of claims 1 to 3, further comprising:
a plurality of settlement interfaces for requesting an external system to perform all or a portion of the settlement processing in accordance with an instruction from the settlement management function unit, wherein a method of the instruction to the plurality of settlement interfaces is a same method unified for all the settlement interfaces.

5. The settlement apparatus according to any one of claims 1 to 4, wherein the selectable payment system by the certain user is the payment system to which the certain user has transmitted the necessary information and also available at the business operator site that has requested the settlement processing for the certain user.

6. The settlement apparatus according to any one of claims 1 to 5, further comprising:
a history management storage unit that stores information when the settlement processing is performed as history information; and
a history management function unit that manages the history information for each of the users and outputs the history information in response to a request.

7. A settlement management system in which a terminal used by a user, a business operator site connected to the terminal used by the user, and a settlement apparatus that manages a payment system and settles accounts are mutually connected, wherein
the terminal used by the user transmits necessary information to settle accounts, by using the payment system, to the settlement apparatus and specifies, when a transaction is conducted at the business operator site, the payment system for the settlement apparatus,
the business operator site requests the settlement apparatus to perform a portion or all of settlement processing at the business operator site, and
the settlement apparatus is the settlement apparatus according to any one of claims 1 to 6.

8. A settlement method executed by a settlement apparatus connected to each of a terminal used by a user and a business operator site connected to the terminal used by the user to manage a payment system and to settle accounts, comprising the steps of:
preparing an account management storage unit that receives and stores necessary information to settle accounts by using the payment system;
tying and managing the received information and the payment system using the information for each of the users; and
when settlement processing of a certain user is requested from the business operator site, identifying payment systems that can be used by the certain user by executing the account management function step and performing the settlement processing by the selected payment system by using the necessary information tied to the payment system selected by the certain user from among the identified payment systems, the settlement processing being performed by the selected payment system.

9. A settlement program incorporated into a settlement apparatus connected to each of a terminal used by a user and a business operator site connected to the terminal used by the user to manage a payment system and to settle accounts, the program causing a computer to function as the settlement apparatus, the settlement apparatus comprising:
an account management storage unit that receives and stores necessary information to settle accounts by using the payment system;
an account management function unit that ties and manages the received information and the payment system using the information for each of the users; and
a settlement management function unit that, when settlement processing of a certain user is requested from the business operator site, identifies the payment systems that can be used by the certain user by using the account management function unit and performs the settlement processing by using the necessary information tied to the payment system selected by the certain user from among the identified payment systems, the settlement processing being performed by the selected payment system.
